# FASCICULE DE BREVET EUROPEEN

(11) **EP 1 445 513 B1**
(45) Date de publication et mention de la délivrance du brevet: **31.08.2005**
(21) Numéro de dépôt: 03293335.0
(22) Date de dépôt: 24.12.2003
(51) Int. Cl.: F16H 57/02

(54) **Boite de vitesses**
Getriebegehäuse
Tansmission casing

(30) Priorité: 06.01.2003 FR 0300075
(43) Date de publication de la demande: 11.08.2004
(73) Titulaire: Peugeot Citroen Automobiles, 78140 Velizy-Villacoublay (FR)
(72) Inventeur: Ramelli, Patrick, 57690 Crehange (FR)
(74) Mandataire: De Cuenca, Emmanuel Jaime

(56) Documents cités:
- EP-A- 0 057 113
- DE-A- 4 041 899
- FR-A- 2 798 714
- US-A- 4 722 240

## Description

La présente invention concerne une boîte de vitesses comprenant un carter présentant au moins deux ouvertures dans chacune desquelles est montée un roulement, au moins une première ligne d'arbre montée flottante dans un premier roulement et à l'extrémité de laquelle sont implantés, à l'extérieur du carter, au moins un pignon de marche avant moteur et un ensemble synchroniseur comprenant un moyeu synchroniseur, une deuxième ligne d'arbre montée également flottante dans le deuxième roulement et parallèle à la première ligne d'arbre à l'extrémité de laquelle est implanté un autre pignon de marche avant récepteur adapté pour engrèner avec le pignon de marche avant moteur, comme révélé daus FR 2 798 714 A et correspondant au préambule de la revendication 1.

Elle a plus particulièrement pour application les boites de vitesses dans lesquelles les pignons du cinquième rapport sont implantés à l'extérieur du carter.

Les architectures de boite de vitesses actuellement existantes sont compliquées au niveau du cinquième rapport

Le but de l'invention est alors de pallier cet inconvénient et donc de proposer une boite de vitesses d'architecture simplifiée au niveau du cinquième rapport et ce, afin de réduire le coût d'une telle boite.

Pour ce faire, l'invention propose une boite de vitesses comprenant un carter présentant au moins deux ouvertures dans chacune desquelles est montée un roulement, au moins une première ligne d'arbre montée « flottante » dans un premier roulement et à l'extrémité de laquelle sont implantés, à l'extérieur du carter, au moins un pignon de marche avant moteur et un ensemble synchroniseur comprenant un moyeu synchroniseur, une deuxième ligne d'arbre montée également flottante dans le deuxième roulement et parallèle à la première ligne d'arbre à l'extrémité de laquelle est implanté un autre pignon de marche avant récepteur adapté pour engrèner avec le pignon de marche avant moteur, caractérisée en ce que la première ligne d'arbre présente une gorge dans laquelle est montée une demi-rondelle adaptée pour arrêter en translation le roulement, en ce que le pignon implanté sur la première ligne d'arbre présente un épaulement intérieur adapté pour venir entourer l'épaulement extérieur du moyeu synchroniseur également implanté sur la première ligne d'arbre , en ce que l'ensemble des pièces comprenant le pignon de marche avant moteur et l'ensemble synchroniseur, monté sur l'extrémité flottante de la première ligne d'arbre est maintenu en translation par un anneau d'arrêt circulaire.

La solution selon l'invention propose ainsi une nouvelle conception de l'assemblage et du maintien de la ligne d'arbre sur laquelle le rapport de cinquième rapport est destiné à être implanté, telle que la ligne secondaire.

Avantageusement, les pignons de marche avant implantés à l'extérieur du carter de boite de vitesses sont respectivement le pignon moteur et le pignon récepteur du cinquième rapport de marche avant.

Avantageusement également, la ligne d'arbre présente à son extrémité deux orifices symétriques l'un par rapport à l'autre et permettant l'amenée d'huile en dessous du pignon.

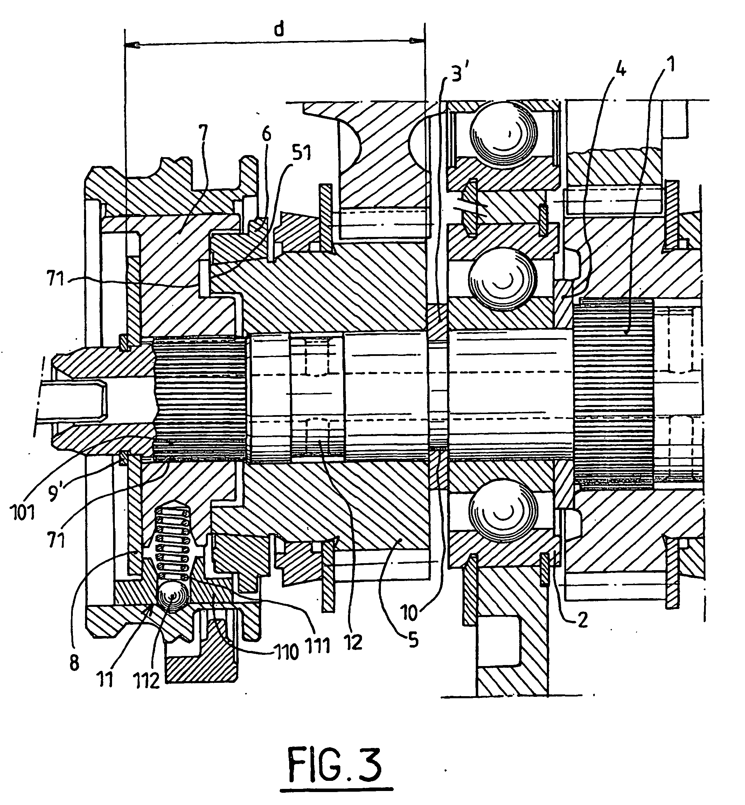

D'autres avantages et caractéristiques de l'invention ressortiront mieux à la lecture de la description détaillée faite en référence aux figures 1 à 3 dans lesquelles :
- figure 1 est une vue en perspective d'une ligne d'arbre dite »secondaire » d'une boite de vitesses selon l'état de l'art ;
- figure 2 est une vue en perspective d'une ligne d'arbre .dite »secondaire » d'une boite de vitesses selon l'invention ;
- figure 3 est une vue en coupe transversale de la ligne d'arbre représentée sur la figure 2.

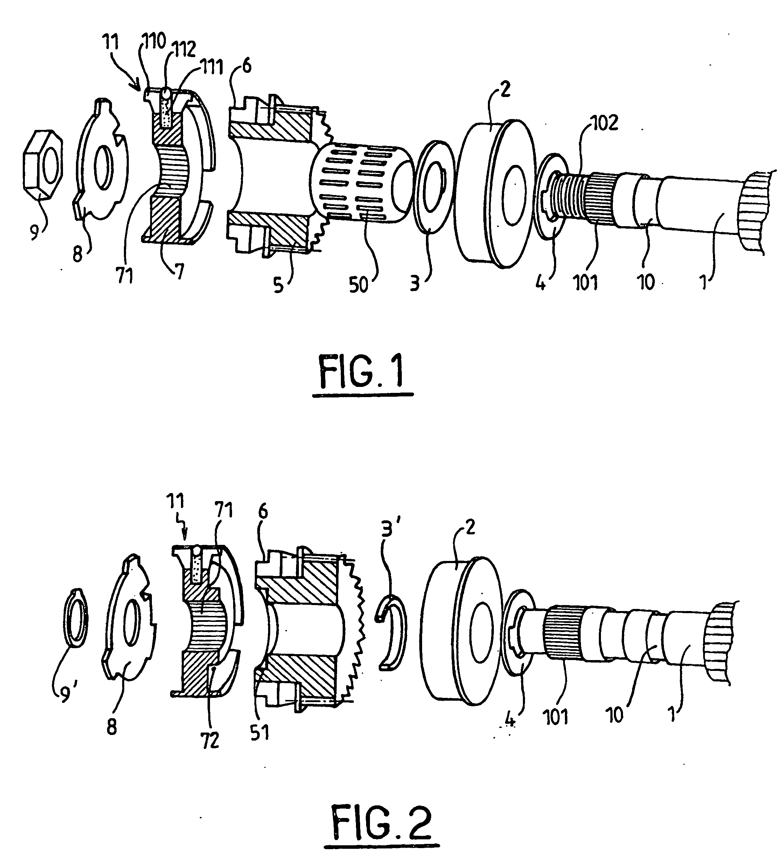

La figure 1 est une vue en perspective éclatée d'une ligne d'arbre dit « ligne d'arbre secondaire » 1 montée flottante dans une boite de vitesses selon l'état de l'art.

Un roulement à billes 2 est emmanché sur cet arbre 1 et monté serré dans une ouverture non représentée du carter de boite. Ce roulement 2 est maintenu bloqué en translation au moyen d'une part d'une rondelle 3 du coté extérieur au carter de boite et d'une rondelle 4 identique à celle 3 du côté intérieur au carter de boite.

Du côté extérieur au carter de boite et sur la partie flottante de l'arbre 1 sont également emmanchés sur l'arbre, respectivement en partant du roulement 2 vers l'extérieur de la boite, une douille à aiguilles 50 autour de laquelle est emmanchée un pignon fou de cinquième vitesse 5 et sa bague d'armement associée 6, un moyeu synchroniseur 7 dont les cannelures intérieures 71 peuvent coulisser librement sur des cannelures 101 pratiquées à la périphérie de l'arbre 1, une plaque de réarmement 8.

Un écrou 9 est serré à l'extrémité de l'arbre 1 sur une partie filetée 102 pour maintenir l'ensemble « flottant ainsi décrit ».

Un dispositif d'armement connu en soi 11 composé d'un pavé d'armement 110, d'un ressort 111 et d'une bille 112 est montée sur le moyeu 7.

Un tel assemblage est relativement compliqué à réaliser.

Pour simplifier cet assemblage, l'invention prévoit de substituer tout d'abord la rondelle 3 par une demi-rondelle 3' montée dans une gorge 10 pratiquée à la périphérie de l'arbre secondaire 1.

L'épaisseur de la demi-rondelle 3' doit être suffisante afin que la ligne d'arbre ne chemine pas c'est à dire ne bouge pas sous effort.

Elle prévoit également de modifier le pignon fou 5 et le moyeu 7 associé afin de pouvoir enlever la douilles à aiguilles tout en conservant le même jeu axial fonctionnel c'est à dire la distance qui sépare la face extérieure de la plaque de réarmement 8 est la face intérieure du pignon fou 5 (voir distance d figure 2). Cette modification consiste à réaliser un épaulement 51 à l'intérieur du pignon fou 5 de sorte que l'épaulement extérieur 71 du moyeu 7 puisse pénétrer à l'intérieur de celui-ci lors du coulissement du moyeu vers l'intérieur de la boite de vitesses.

Avec une telle modification, le pignon fou 5 peut tourner librement autour de l'arbre 1 sans qu'il soit nécessaire d'implanter une douille à aiguilles.

L'invention prévoit enfin de monter un circlips ou anneau d'arrêt 9' en bout d'arbre à la place de l'écrou pour maintenir l'ensemble flottant en place. Ce circlips 9' est logé dans une gorge de l'arbre secondaire 1 et assure le jeu axial défini ci-dessus.

La lubrification de l'alésage et des faces du pignon fou de 5^{ème} est assurée par deux orifices de passage d'huile 12 réalisés dans l'arbre secondaire qui débouchent dessous le pignon fou en position et de trois crans 72 réalisés sur la face d'appui du moyeu synchroniseur 7

Ces trois crans 72 rapportés sur le moyeu sont disposés à 120°. La face du pignon récepteur du moyeu est ainsi mieux lubrifiée.

La solution selon l'invention qui vient d'être décrite amène les avantages suivants :
- coût de fabrication et d'assemblage réduit ;
- gain de masse du fait de la suppression de pièces ;
- facilité d'assemblage de la vitesse concernée, en particulier de la cinquième, en ligne de montage de la boite de vitesses ;
- facilité de démontage et remontage sur véhicule en cas de défaillance macénique de l'une des pièces : en effet, seul le circlip est à enlever à l'aide d'une pince pour libérer l'ensemble flottant ;
- pas d'opération de double engagement de vitesses afin d'éviter la rotation de l'arbre secondaire et de permettre le serrage de l'écrou, ce qui évite l'effort important appliqué sur les deux dentures à la fois en statique car le couple appliqué à l'écrou est celui du couple de la boite de vitesses ;
- pas de collage du moyeu de cinquième et de l'écrou sur l'arbre secondaire de par la suppression de l'écrou d'une part et du coulissement du moyeu d'autre part ;
- lubrification correcte de la denture de crabotage en fonctionnement de par le cheminement de l'huile entre le moyeu et le pignon fou de cinquième amené sur les crabots par le manchon ; la conception de la boite de vitesses selon l'état de l'art ne permettait pas cette lubrification car la douille à aiguilles obstruait les orifices de passage de l'huile.

## Revendications

1. Boite de vitesses comprenant un carter présentant au moins deux ouvertures dans chacune desquelles est montée un roulement, au moins une première ligne d'arbre (1) montée flottante dans un premier roulement et à l'extrémité de laquelle sont implantés, à l'extérieur du carter, au moins un pignon de marche avant moteur (5) et un ensemble synchroniseur comprenant un moyeu synchroniseur (7), une deuxième ligne d'arbre montée également flottante dans le deuxième roulement et parallèle à la première ligne d'arbre à l'extrémité de laquelle est implanté un autre pignon de marche avant récepteur adapté pour engrèner avec le pignon de marche avant moteur, et le pignon implanté sur la première ligne d'arbre présente un épaulement intérieur (51) adapté pour venir entourer l'épaulement extérieur du moyeu synchroniseur également implanté sur la première ligne d'arbre, **caractérisée en ce que** la première ligne d'arbre (1) présente une gorge (10) dans laquelle est montée une demi-rondelle (3') adaptée pour arrêter en translation le roulement, **en ce que** l'ensemble des pièces comprenant le pignon de marche avant moteur et l'ensemble synchroniseur, monté sur l'extrémité flottante de la première ligne d'arbre est maintenu en translation par un anneau d'arrêt circulaire (8).

2. Boite de vitesses selon la revendication 1, **caractérisée en ce que** les pignons de marche avant implantés à l'extérieur du carter de boîte de vitesses sont respectivement le pignon moteur et le pignon récepteur du cinquième rapport de marche avant.

3. Boite de vitesses selon la revendication 1 ou 2, **caractérisée en ce que** le pignon de marche avant est le pignon de cinquième rapport.

4. Boite de vitesses selon l'une des revendications 1 à 3, **caractérisée en ce que** la ligne d'arbre présente à son extrémité deux orifices (12) symétriques l'un par rapport à l'autre et permettant l'amenée d'huile en dessous du pignon (5).

## Patentansprüche

1. Getriebe mit einem Gehäuse, das mindestens zwei Öffnungen aufweist, in denen jeweils ein Lager montiert ist, mit mindestens einer ersten Welle (1), die schwebend in einem ersten Lager montiert ist und an deren Ende außerhalb des Gehäuses mindestens ein antreibendes Vorlaufrad (5) und eine Synchronisiereinheit (7) vorgesehen sind, mit einer zweiten Welle, die ebenfalls schwebend im zweiten Lager montiert ist und parallel zur ersten Welle verläuft, an deren Ende ein empfangendes Vorlaufrad vorgesehen ist, das mit dem antreibenden Vorlaufrad in Eingriff stehen kann, wobei das an der ersten Welle angeordnete Ritzel eine innere Schulter (51) aufweist, welche die äußere Schulter der ebenfalls an der ersten Welle angeordneten Synchronisiernabe umgeben kann, **dadurch gekennzeichnet, dass** die erste Welle (1) einen Hals (10) aufweist, in dem eine Halbscheibe (3') montiert ist, die das Lager in Translation blockieren kann, und dass die Gesamtheit der Teile, zu denen das antreibende Vorlaufrad und die Synchronisiereinheit gehören und die auf dem schwebenden Ende der ersten Welle montiert sind, von einem kreisförmigen Anlagering (8) in Translation gehalten werden.

2. Getriebe nach Anspruch 1, **dadurch gekennzeichnet, dass** die außerhalb des Getriebegehäuses angeordneten Vorlaufräder das antreibende Ritzel beziehungsweise das aufnehmende Ritzel für den fünften Vorwärtsgang sind.

3. Getriebe nach Anspruch 1 oder 2, **dadurch gekennzeichnet, dass** das Vorlaufrad das Ritzel für den fünften Gang ist.

4. Getriebe nach einem der Ansprüche 1 bis 3, **dadurch gekennzeichnet, dass** die Welle an ihrem Ende zwei symmetrische Öffnungen (12) aufweist, welche die Ölzufuhr unterhalb des Ritzels (5) ermöglichen.

## Claims

1. Gear box comprising a housing having at least two openings in each of which a bearing is mounted, at least one first line shafting (1) mounted so as to float in a first bearing and at the end of which are installed, outside the housing, at least one forward drive gear (5) and a synchroniser assembly comprising a synchroniser hub (7), a second line shafting also mounted so as to float in the second bearing and parallel to the first line shafting at the end of which is installed another forward counterdriven gear suitable for meshing with the forward drive gear, and the gear installed on the first line shafting has an inner shoulder (51) suitable for surrounding the outer shoulder of the synchroniser hub, also installed on the first line shafting, **characterised in that** the first line shafting (1) has a throat (10) in which is mounted a half-washer (3') suitable for stopping the bearing in translation, **in that** the assembly of parts comprising the forward drive gear and the synchroniser assembly, mounted on the floating end of the first line shafting, is maintained in translation by a circular spring-retaining ring (8).

2. Gear box according to Claim 1, **characterised in that** the forward gears installed outside the gear box housing are respectively the drive gear and the counterdriven gear of the fifth forward gear.

3. Gear box according to Claim 1 or 2, **characterised in that** the forward gear is the fifth gear.

4. Gear box according to one of Claims 1 to 3, **characterised in that** the line shafting has at its end two orifices (12) symmetrical to each other and allowing oil to be supplied to the lower part of the gear (5).
